(19) Europäisches Patentamt / European Patent Office / Office européen des brevets

(11) **EP 2 176 833 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(21) Anmeldenummer: **08773853.0**

(22) Anmeldetag: **03.07.2008**

(51) Int Cl.:
***G06T 7/00*** *(2006.01)*

(86) Internationale Anmeldenummer:
**PCT/EP2008/005447**

(87) Internationale Veröffentlichungsnummer:
**WO 2009/010195 (22.01.2009 Gazette 2009/04)**

(54) **VERFAHREN UND SYSTEM ZUR ERMITTLUNG DER POSITION UND ORIENTIERUNG EINER KAMERA RELATIV ZU EINEM REALEN OBJEKT**

METHOD AND SYSTEM FOR DETERMINING THE POSITION AND ORIENTATION OF A CAMERA RELATIVE TO A REAL OBJECT

PROCÉDÉ ET SYSTÈME DE DÉTERMINATION DE LA POSITION ET DE L'ORIENTATION D'UNE CAMÉRA PAR RAPPORT À UN OBJET RÉEL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.07.2007 DE 102007033486**

(43) Veröffentlichungstag der Anmeldung:
**21.04.2010 Patentblatt 2010/16**

(73) Patentinhaber: **metaio GmbH**
**80797 München (DE)**

(72) Erfinder: **MEIER, Peter**
**80799 München (DE)**

(74) Vertreter: **Schraud, Robert Alexander**
**Klunker Schmitt-Nilson Hirsch**
**Patentanwälte**
**Destouchesstrasse 68**
**80796 München (DE)**

(56) Entgegenhaltungen:
WO-A-2005/000139    US-A1- 2005 151 963
US-A1- 2005 174 361    US-A1- 2005 285 879

EP 2 176 833 B1

**Beschreibung**

Die Erfindung betrifft ein Verfahren und ein System zur Ermittlung der Position und Orientierung einer Kamera oder einer Darstellungsvorrichtung relativ zu einem realen Objekt zur Verwendung bei der Vermischung eines virtuellen Datenmodells mit einem von der Kamera bzw. der Darstellungsvorrichtung generierten Abbild, welches wenigstens einen Teil des realen Objekts beinhaltet.

Ein derartiges Verfahren und ein derartiges System sind im Stand der Technik insbesondere im Zusammenhang mit sogenannten Augmented Reality Systemen bekannt. Diese erlauben die Überlagerung von Computer-generierten, virtuellen Informationen mit Seheindrücken der realen Umgebung. Hierzu werden die Seheindrücke der realen Welt vorzugsweise mittels auf dem Kopf getragenen halbdurchlässigen Datenbrillen mit virtuellen Informationen vermischt. Die Einblendung der virtuellen Informationen bzw. Objekte kann dabei kontextabhängig, d.h. angepasst und abgeleitet von der jeweilig betrachteten realen Umgebung ausgeführt sein. Als virtuelle Information kann grundsätzlich jede Art von Daten wie Texte, Abbildungen etc. verwendet werden. Die reale Umgebung kann mit einer, beispielsweise auf dem Kopf des Anwenders getragenen, Kamera erfasst werden. Der Anwender hat durch die Überlagerung von virtueller und realer Umgebung die Möglichkeit, Soll-Ist-Abgleiche einfach durchzuführen. Bei einer Kopfbewegung des Anwenders eines Augmented Reality Systems müssen sämtliche künstlichen Objekte dem sich ändernden Sichtfeld nachgeführt werden.

Während eines Initialisierungsvorgangs wird beispielsweise ein Objekt der realen Umgebung mit der Kamera in Beziehung gesetzt. Dadurch kann ein Kamerabild der realen Umgebung zugeordnet werden. Die reale Umgebung kann eine komplexe Vorrichtung und das erfasste Objekt kann ein markantes Element der Vorrichtung sein. Während eines folgenden sogenannten Tracking-Vorgangs, der den eigentlichen Arbeitsvorgang repräsentiert während beispielsweise ein Anwender des Systems kontextabhängige Information an einer gewünschten Position in Bezug zur realen Umgebung in einer verwendeten Anzeigeeinrichtung eingeblendet erhält, wird das eingeblendete virtuelle Datenmodell der Bewegung des Benutzers und einer damit einhergehenden Veränderung der Sicht auf die reale Welt nachgeführt.

Weiterhin ist aus dem Stand der Technik die Augmented Reality-Technologie in Verbindung mit einer Überlagerung virtueller Modelle mit der Realität zum Zwecke der Überprüfung der Korrektheit der Modelle bzw. der nach der Spezifikation hergestellten Realität bekannt. Anwendungsbereiche sind zum Beispiel die Fabrikplanung, etwa wie in DE 101 28 015 A1 oder DE 10 2004 046 144 A1 beschrieben, oder das Automobildesign, wie in DE 202 03 367 A beschrieben. Aus dem Stand der Technik sind auch Geräte bekannt, die man mit der Hand bewegt und damit eine Blickposition in eine virtuelle Welt einnimmt (z.B. US 5 436 638 A).

Die Dokumente US 2005/285879, US 2005/174361, US 2005/151963 offenbaren eine überlagerung von Modellen mit realen Objekten.

Grundsätzlich geht es bei solchen Augmented Reality Systemen oder Verfahren um die Erkennung der Kamerapose relativ zur Realität. Die Kamerapose ist die Position und Orientierung der Kamera im Raum. Die Realität liegt meist in irgendeiner Form als Modell vor, beispielsweise als 3D-Modell, welches die geometrischen Eigenschaften der Realität oder eines Teils der Realität umschreibt. Das 3D-Modell kann beispielsweise aus einer Konstruktionszeichnung, etwa einem CAD-Dokument, gewonnen werden. Das reale Objekt wird üblicherweise in Bezug zu einem Objektkoordinatensystem gesetzt, die Kamera wiederum in Bezug zu einem Kamerakoordinatensystem. Hierbei ist insbesondere die genaue Ermittlung der Transformation zwischen Objektkoordinatensystem und Kamerakoordinatensystem zur Bestimmung der Kamerapose im allgemeinen problematisch.

Aufgabe der Erfindung ist es, ein System und Verfahren der eingangs genannten Art bereitzustellen, welche jeweils eine weitgehend genaue Darstellung virtueller Objekte bezüglich der Realität ermöglichen.

Diese Aufgabe wird gelöst durch ein Verfahren gemäß den Merkmalen des Patentanspruchs 1 und gemäß den Merkmalen des Patentanspruchs 8. Weiterhin wird die Aufgabe gelöst durch ein System gemäß den Merkmalen des Patentanspruchs 14 und gemäß den Merkmalen des Patentanspruchs 21. Weiterhin betrifft die Erfindung ein Computerprogrammprodukt nach Patentanspruch 24.

Anwendungsbeispiele der Erfindung umfassen insbesondere die Fabrikplanung, den Prototypenbau oder Versuchsbau in der Produktentwicklung (z.B. auch in Crashtests für die Fahrzeugentwicklung), und die Abnahme im Anlagenbau. Hierbei ist insbesondere ein Abgleich der Qualität eines virtuellen Modells gegenüber dem realen Objekt beziehungsweise eines realen Objekts gegenüber dem virtuellen Modell ermöglicht.

Mögliche Anwendungen des Systems und des Verfahrens gemäß der Erfindung schließen insbesondere Anwendungen der Augmented Reality Technologie in den Bereichen Service und Wartung, Anwendungen in der Produktion sowie allgemein Anwendungen im mobilen Umfeld ein. Der Vorteil, der sich aus der Anwendung des erfindungsgemäßen Verfahrens und des erfindungsgemäßen Systems ergibt, ist insbesondere eine hohe Genauigkeit bei der Ermittlung einer Transformation zwischen Objektkoordinatensystem und Kamerakoordinatensystem zur Bestimmung einer genauen Kamerapose gegenüber dem realen Objekt mit Hilfe des Sensorsystems, so dass das virtuelle Datenmodell weitgehend genau mit der Realität überlagert werden kann bzw. genaue relative Abweichungen zwischen Datenmodell und Realität feststellbar sind.

Insbesondere betrifft die Erfindung ein Verfahren zur Ermittlung der Position und Orientierung einer Kamera relativ zu einem realen Objekt der eingangs genannten Art mit folgenden Schritten: Anordnen der Kamera auf einem beweglichen Teil eines Sensorsystems, das mit wenigstens einem Messtaster koppelbar ist, welcher geeignet ist, mit wenigstens einem Teil des realen Objekts in Berührung zu kommen, Positionieren des beweglichen Teils des Sensorsystems mit aufgebrachter Kamera in der Weise, dass das Abbild durch die Kamera generierbar ist, Generieren von Positionsdaten des Sensorsystems in Bezug auf das reale Objekt, und Bestimmung der Position und Orientierung der Kamera auf Basis der Positionsdaten des Sensorsystems.

Um die Kamerapose idealerweise in Echtzeit zu ermitteln, können unterschiedliche Sensoren oder Sensorkombinationen eingesetzt werden. Vorteilhafterweise können hochgenaue mechanische Messarme mit Messtastern eingesetzt werden, die dazu dienen, die relative Sensorposition einzumessen. Somit kann ein hochgenaues Sensorsystem eingesetzt werden, um eine weitgehend genaue Transformation zwischen Objekt- und Kamerakoordinatensystem als Ausgangspunkt für die Bestimmung der Kamerapose zu ermitteln.

Insbesondere wird ein fester Teil des Sensorsystems in einem festen Bezug zum realen Objekt angeordnet und ein Sensorkoordinatensystem als Bezugssystem des Sensorsystems eingerichtet. Weiterhin erfolgt eine Bestimmung der Position des Sensorkoordinatensystems in Bezug auf das reale Objekt. Vorteilhaft erfolgt die Bestimmung der Position des Sensorkoordinatensystems in Bezug auf das reale Objekt dadurch, dass der Messtaster in wenigstens einem Einmessvorgang mit wenigstens einem Teil des realen Objekts in Berührung gebracht wird.

In einer Ausführungsform der Erfindung wird der wenigstens eine Einmessvorgang gemäß einem von mehreren hinterlegten Einmessalgorithmen vorgenommen. Beispielsweise wird vom Benutzer wenigstens ein Teil eines CAD-Modells des realen Objekts ausgewählt, wobei auf Grundlage der Auswahl ein Einmess-Algorithmus für den wenigstens einen Einmessvorgang und wenigstens ein Messprogramm ausgewählt wird.

In einem weiteren Aspekt der Erfindung betrifft diese ein Verfahren zur Ermittlung der Position und Orientierung einer Kamera oder einer Darstellungsvorrichtung relativ zu einem realen Objekt der eingangs genannten Art mit folgenden Schritten: Anordnen eines Trackingsystems auf einem ersten beweglichen Teil eines Sensorsystems, das mit wenigstens einem Messtaster koppelbar ist, welcher geeignet ist, mit wenigstens einem Teil des realen Objekts in Berührung zu kommen, und Anordnen der Kamera bzw. der Darstellungsvorrichtung in festem Bezug zu einem zweiten beweglichen Teil des Sensorsystems.

Der erste bewegliche Teil des Sensorsystems wird derart positioniert, dass der zweite bewegliche Teil des Sensorsystems vom Trackingsystem erfassbar ist.

Der zweite bewegliche Teil des Sensorsystems mit der Kamera bzw. Darstellungsvorrichtung wird in der Weise positioniert, dass das Abbild durch die Kamera bzw. die Darstellungsvorrichtung generierbar ist. Es werden sodann erste Positionsdaten des Sensorsystems in Bezug auf das reale Objekt und zweite Positionsdaten des Trackingsystems in Bezug auf den zweiten beweglichen Teil des Sensorsystems generiert. Die Bestimmung der Position und Orientierung der Kamera bzw. der Darstellungsvorrichtung erfolgt auf Basis der ersten und zweiten Positionsdaten.

Dieser Aspekt reflektiert eine vorteilhafte Umsetzung des erfindungsgemäßen Konzepts dahingehend, dass die erfindungsgemäße Idee auch für den Einsatz sogenannter Head Mounted Displays (HMDs) verwendet werden kann. Beispielsweise ist der zweite bewegliche Teil des Sensorsystems vom ersten beweglichen Teil unabhängig bewegbar und wird vom Trackingsystem des ersten beweglichen Teils erfasst. Damit ist eine Kopplung zwischen mobiler Kamera bzw. Darstellungsvorrichtung (z.B. Head Mounted Display) und Sensorsystem derart bewerkstelligt, dass sich die Pose der Kamera bzw. Darstellungsvorrichtung unter Benutzung der genauen Einmessparameter des Sensorsystems relativ zum realen Objekt berechnen läßt, ohne an das Sensorsystem mechanisch gebunden zu sein. Aus der Kombination von mechanischem Sensor-Messsystem mit einem Trackingsystem, beispielsweise einem optischen Trackingsystem, welches am Sensorkopf des mechanischen Sensorsystems befestigt ist und die Kamera bzw. Darstellungsvorrichtung "trackt" (nachverfolgt), ergibt sich ein Gesamtsystem, welches eine höhere Reichweite und einen leichteren Sensorkopf besitzt kombiniert mit einer weitgehend genauen Ermittlung der Pose.

Insbesondere kann nach dem Eintasten mittels des Messtasters über die Transformation zwischen Trackingsystem und Objektkoordinatensystem die Transformation zwischen Trackingsystem und zweitem beweglichen Teil des Sensorsystems und die Transformation zwischen dem zweiten beweglichen Teil des Sensorsystems und der Kamera bzw. der Darstellungsvorrichtung dynamisch eine Pose der Kamera bzw. der Darstellungsvorrichtung, die mit dem zweiten beweglichen Teil des Sensorsystems verbunden ist, berechnet werden.

In einer Ausführungsform ist das Trackingsystem als ein mechanisches Trackingsystem oder ein optisches Trackingsystem ausgeführt. Optische Mess-oder Trackingsysteme haben in diesem Zusammenhang den Vorteil, dass sie einen leichten, ergonomisch einfach verwendbaren und unabhängig bewegbaren Sensorkopf ermöglichen, der beispielsweise auf dem Kopf getragen werden kann. Allerdings liefert der Sensorkopf nur dort gültige Werte, wo er von den optischen Sensoren des Trackingsystems gesehen wird. Der Sensorkopf mechanischer Messsysteme ist schwerer und hat eine geringere Reichweite. Allerdings kann er auch an schwieriger zugänglichen Stellen geführt werden (zum Beispiel der Fahrzeuginnenraum).

In einer Ausführungsform der Erfindung wird eine Güte der Übereinstimmung des virtuellen Datenmodells und des realen Objekts bestimmt, insbesondere erfolgt eine Vermessung wenigstens eines Abstandes zwischen wenigstens einem Teil des realen Objekts und wenigstens einem Teil des virtuellen Datenmodells. Beispielsweise wird die Bestimmung der Güte der Übereinstimmung des virtuellen Datenmodells und des realen Objekts unter Verwendung eines kantenbasierten oder flächenbasierten Trackingverfahrens durchgeführt.

Eine Vermessung wenigstens eines Abstandes zwischen wenigstens einem Teil des realen Objekts und wenigstens einem Teil des virtuellen Datenmodells kann dadurch erfolgen, dass vom Benutzer ein Teil des virtuellen Modells im Abbild oder des realen Objekts in der Realität mittels des Messtasters unter Bestimmung eines ersten Punkts ausgewählt wird und anschließend vom Benutzer unter Bestimmung eines zweiten Punkts ein korrespondierendes Teil des realen Objekts mittels des Messtasters bzw. des virtuellen Modells im Abbild ausgewählt wird, wobei der zu bestimmende Abstand der Abstand zwischen dem ersten und zweiten Punkt ist.

Die Bestimmung der Güte der Übereinstimmung des virtuellen Datenmodells und des realen Objekts kann den Schritt beinhalten, dass durch den Benutzer oder durch einen implementieren Algorithmus ein Abgleich bei der Vermischung des realen Objekts und des virtuellen Datenmodells vorgenommen wird, bis wenigstens ein Teil des Datenmodells einen korrespondierenden Teil des realen Objekts weitgehend korrekt überlagert, wobei das Maß für den vorgenommenen Abgleich als Basis für eine Aussage über die Güte der Übereinstimmung verwendet wird.

Insbesondere ermöglicht die Erfindung auch, eine relativ genaue Ungenauigkeitsinformation, insbesondere eine Unsicherheitsinformation, bei der Positionierung des Datenmodells relativ zum realen Objekt zu generieren, wie in DE 10 2005 061 952 näher ausgeführt.

Eine vorteilhafte Ausprägung des erfindungsgemäßen Systems sieht vor, dass die Kamera bzw. das Trackingsystem an einer Adaptereinrichtung angebracht ist, die eine mechanische Verbindung zwischen Kamera/Trackingsystem und dem Messtaster herstellt. Durch den Einsatz eines Adapters, der Messtaster und Kamera/Trackingsystem miteinander verbindet, kann nun sehr einfach eine hochgenaue Überlagerung durchgeführt werden. Insbesondere ist die Adaptereinrichtung so gestaltet, dass unterschiedliche Messtaster wiederholbar bzw. austauschbar einsetzbar und wieder entfernbar sind. Vorteilhaft ist die Adaptereinrichtung so gestaltet, dass bei Verbindung mit einem Messtaster dieser automatisch von dem Sensorsystem erkennbar ist.

Eine andere Ausführungsform sieht vor, dass eine Anzeigeeinrichtung, insbesondere ein Bildschirm, zur Darstellung des Abbilds der Kamera an der Adaptereinrichtung angebracht ist. Ebenso kann die Verarbeitungseinrichtung zur Berechnung der gewünschten Pose an der Adaptereinrichtung angebracht sein. Hierbei ist es z.B. vorgesehen, dass die Kamera, die Verarbeitungseinrichtung und die Anzeigeeinrichtung als integrierte Einrichtung ausgeführt sind, die an der Adaptereinrichtung angebracht ist, welche wiederum eine mechanische Verbindung zwischen dem Messtaster und integrierter Einrichtung herstellt.

Weitere vorteilhafte Ausführungsformen und Weiterbildungen der Erfindung sind den Unteransprüchen zu entnehmen.

Die Erfindung wird im folgenden anhand der in der Zeichnung dargestellten Figuren, die vorteilhafte Ausführungsformen der Erfindung darstellen, näher erläutert.

Fig. 1 zeigt in schematischer Darstellung eine Ausführungsform eines erfindungsgemäßen Systems zur Ermittlung der Position und Orientierung einer Kamera relativ zu einem realen Objekt,

Fig. 2 zeigt in schematischer Darstellung das System gemäß Figur 1 mit visualisierten Transformationen zwischen den einzelnen Komponenten,

Fig. 3 zeigt in schematischer Darstellung weitere Ausführungsformen eines erfindungsgemäßen Systems zur Ermittlung der Position und Orientierung einer Kamera bzw. einer Darstellungsvorrichtung relativ zu einem realen Objekt mit jeweils visualisierten Transformationen zwischen den einzelnen Komponenten,

Fig. 4 zeigt in schematischer Darstellung eine weitere Ausführungsform eines erfindungsgemäßen Systems,

Fig. 5 zeigt ein Flussdiagramm über einen Ablauf eines Verfahrens in einem Augmented Reality System, in welchem das erfindungsgemäße Konzept implementiert ist.

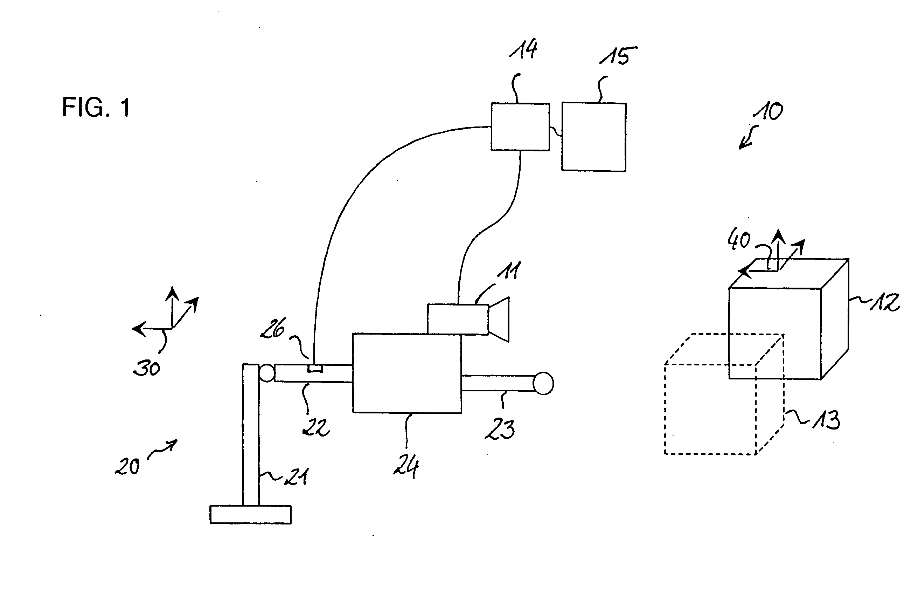

Fig. 1 zeigt in schematischer Darstellung eine Ausführungsform eines erfindungsgemäßen Systems zur Ermittlung der Position und Orientierung einer Kamera relativ zu einem realen Objekt. Das System 10 umfasst ein Sensorsystem 20 mit wenigstens einem beweglichen Teil 22, das an einem festen Teil 21 über ein bewegliches Gelenk befestigt ist. Das Sensorsystem kann auch weitere bewegliche Teile aufweisen, die jeweils untereinander über Gelenke o.ä. verbunden sind, oder kann ein oder mehrere optische Trackingsysteme aufweisen, welche die einzelnen Teile des Sensorsystems koppeln. Der so gebildete bewegliche Teil 22 in Form eines Messarms ist im vorliegenden Beispiel über eine Adaptereinrichtung 24 mit wenigstens einem Messtaster 23 verbunden, welcher geeignet ist, mit wenigstens einem Teil eines realen Objekts 12 in Berührung gebracht zu werden. Das Sensorsystem kann auf vielfältige Art ausgebildet sein, und kann insbesondere auch als optisches Sensorsystem realisiert sein. Eine Kamera 11, die auf dem Messarm 22 des Sensorsystems 20 angeordnet ist, dient zur Generierung eines Abbilds. Die Kamera 11 kann mit einer Lichtquelle zur Ausleuchtung des realen Objekts versehen sein.

Weiterhin ist eine Schnittstelleneinrichtung 26 vorgesehen, um Positionsdaten des Sensorsystems 20 in Bezug auf das reale Objekt 12 auszugeben zur Bestimmung der Position und Orientierung (Pose) der Kamera 11 relativ zum realen Objekt 12, wie im folgenden noch erläutert. Unter Positionsdaten sind allgemein Daten zu verstehen, die einen Rückschluss auf die Position und Orientierung der betreffenden Komponente zulassen. Beispielsweise werden vom Sensorsystem nur Positions-Rohdaten von einzelnen Sensorkomponenten und Abmessungen von Komponenten geliefert, die erst in einem externen Rechner zu eigentlichen, für die Anwendung auswertbaren Positionsdaten verarbeitet werden.

Diese Berechnung der Kamerapose wird vorliegend durch eine mit der Schnittstelleneinrichtung 26 koppelbare, externe Verarbeitungseinrichtung 14 in Form eines Rechners vorgenommen. Die so berechnete Kamerapose dient zur kontextrichtigen Vermischung eines virtuellen Datenmodells 13 mit dem von der Kamera 11 generierten Abbild, welches auf einer externen Darstellungsvorrichtung 15 in Form eines Bildschirms dargestellt wird. Dazu ist der Rechner 14 sowohl mit dem Sensorsystem 20 als auch mit der Kamera 11 verbunden, um einerseits die erforderlichen Parameter zur Ermittlung der Kamerapose und andererseits das Abbild der Kamera 11 zu erhalten. Das virtuelle Datenmodell 13 ist im Rechner 14 hinterlegt und wird aufgrund dessen Berechnungen kontextrichtig auf dem Bildschirm 15 dem Abbild der Kamera mit dem realen Objekt 12 überlagert.

Ziel ist es, die Pose, das heißt die Lage und Orientierung, der Kamera 11 relativ zum Objektkoordinatensystem 40 des realen Untersuchungsobjekts 12 zu bestimmen und damit in der Lage zu sein, eine virtuelle Geometrie in Form des Datenmodells 13 dem realen Objekt 12 zu überlagern. Zum Beispiel kann die virtuelle Geometrie 13 eine CAD-Konstruktion eines Bauteils sein und das reale Objekt 12 ein realer Prototyp, der aus der CAD-Konstruktion entstanden ist. Weiterhin wird ein Sensorkoordinatensystem 30 (sog. Sensorweltkoordinatensystem) als Bezugssystem des Sensorsystems eingerichtet.

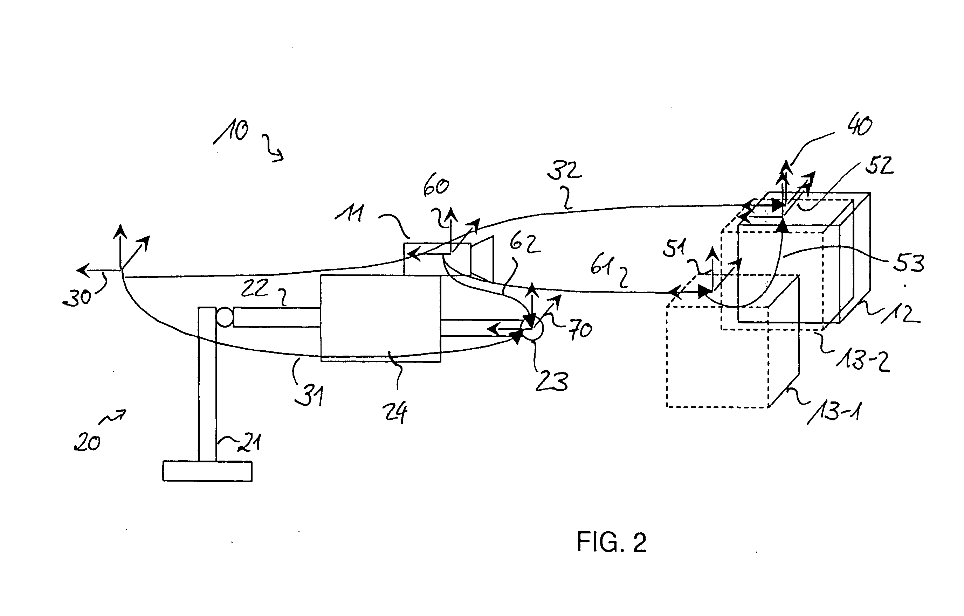

Fig. 2 zeigt in schematischer Darstellung das System gemäß Fig. 1 mit visualisierten Transformationen zwischen den einzelnen Komponenten. Um die Pose der Kamera 11 idealerweise in Echtzeit zu ermitteln, können unterschiedliche Sensoren oder Sensorkombinationen eines Sensorsystems 20 eingesetzt werden. Vorteilhafterweise können hochgenaue mechanische Messarme eingesetzt werden, schematisch veranschaulicht in Form der Messarme 21, 22. Die Pose ergibt sich aber nicht direkt aus dem Sensormessergebnis, sondern ergibt sich zusätzlich aus der Transformation 32 des Sensorweltkoordinatensystems 30 zum Objektkoordinatensystem 40 des realen Objekts 12 und der Transformation 62 zwischen Kamerakoordinatensystem 60 und Sensorkopfkoordinatensystem 70, wobei der Sensorkopf durch den Messtaster 23 gebildet wird. Die Transformationen 32 und 62 werden vorzugsweise dauerhaft im Rechner 14 oder im Sensorsystem 20 abgespeichert. Sie müssen daher nicht immer wieder neu generiert werden, sondern werden zur Berechnung der Pose entsprechend abgerufen.

Zur Ermittlung der Transformation 62 zwischen Sensorkopfkoordinatensystem 70 und Kamerakoordinatensystem 60 können aus dem Stand der Technik bekannte Kalibrierungsverfahren (z.B. "Hand-Eye-Kalibrierung") genutzt werden. Beispielsweise wird ein Verfahren eingesetzt, wie in IEEE Transactions on Systems, Man and Cybernetics, Vol. 23 (1993), Juli/August, Nr. 4, New York (US), Seiten 1168-1175, "A noise-tolerant algorithm for robotic hand-eye calibration with or without sensor orientation measurement" von Z. Zhuang und Y.C. Shiu beschrieben ("Roboter-visuell-motorische Eichung").

Die Ermittlung der Transformation 32 zwischen Objektkoordinatensystem 40 und Sensorweltkoordinatensystem 30 ist im allgemeinen im Bereich Augmented Reality bisher problematisch. Zur Lösung dieses Problems wird erfindungsgemäß ein Sensorsystem in Kombination mit einer Kamera eingesetzt, wie anhand des Sensorsystems 20 und der Kamera 11 veranschaulicht. Insbesondere wird ein Sensorsystem 20 eingesetzt, bei dem das reale Objekt 12 mittels sogenannter Messtaster 23 angetastet wird. Das bedeutet, dass als Ausgangspunkt (sogenannter Einmessvorgang) geometrische Eigenschaften, wie zum Beispiel Oberflächen oder Bohrungen durch den Bediener des Sensorsystems 20 angefahren und berührt werden und somit deren Lage im Sensorweltkoordinatensystem 30 ermittelt wird. Mithin wird auf diese Art beim sog. Einmessen die Transformation 32 zwischen Objektkoordinatensystem 40 und Sensorweltkoordinatensystem 30 ermittelt. Dieses wird in einem festen Bezug zum feststehenden Teil 21 des Sensorsystems 20 und zum realen Objekt 12 gesetzt. Ebenso ist der feststehende Teil 21 in festem Bezug zum realen Objekt 12. Die Transformation 31 zwischen Sensorkopfkoordinatensystem 70 und Sensorweltkoordinatensystem 30 liefert das Sensorsystem 20.

Nach dem Einmessen wird der Messarm 22 des Sensorsystems mit aufgebrachter Kamera 11 in der Weise positioniert, dass das Abbild durch die Kamera generierbar ist. Im Zuge dessen werden Positionsdaten des Sensorsystems 20 in Bezug auf das reale Objekt 12 zur Bildung der Transformation 31 generiert und die Position und Orientierung der Kamera 11 auf Basis der Positionsdaten bestimmt. Im vorliegenden Beispiel ist zusätzlich noch die Transformation 62 zur Ermittlung der Kamerapose relativ zum Sensorkopf 23 erforderlich.

Insbesondere folgende Schritte werden durchgeführt, um Ausgangsparameter für die Berechnung der Kamerapose zu ermitteln. Diese wird z.B. für die Augmented-Reality-Visualisierung (AR-Visualisierung) benötigt:

Beim Positionieren des Sensorsystems 20 mit aufgebrachter Kamera 11, so dass die Kamera 11 zur Erzeugung eines Abbilds das Objekt 12 erfasst, wird die Position des Messtasters 23 in Bezug auf das Sensorweltkoordinatensystem 30 bestimmt, und die Positionsdaten des Messtasters 23 in Bezug auf das Sensorweltkoordinatensystem 30 werden in Form der Transformation 31 ausgegeben. Die Position und Orientierung der Kamera 11 relativ zum realen Objekt 12 wird dann auf Basis der Transformation 31, der Position des Sensorweltkoordinatensystems 30 in Bezug auf das reale Objekt 12 (Transformation 32), und auf Basis der Position der Kamera 11 in Bezug auf den Messtaster 23 (Transformation 62) bestimmt. Grundsätzlich ergibt sich so die zur AR-Visualisierung benötigte Transformation T zwischen Kamera 11 und realem Objekt 12 zu:

$$T^{-1} = 32^{-1} \cdot 31 \cdot 62^{-1}$$

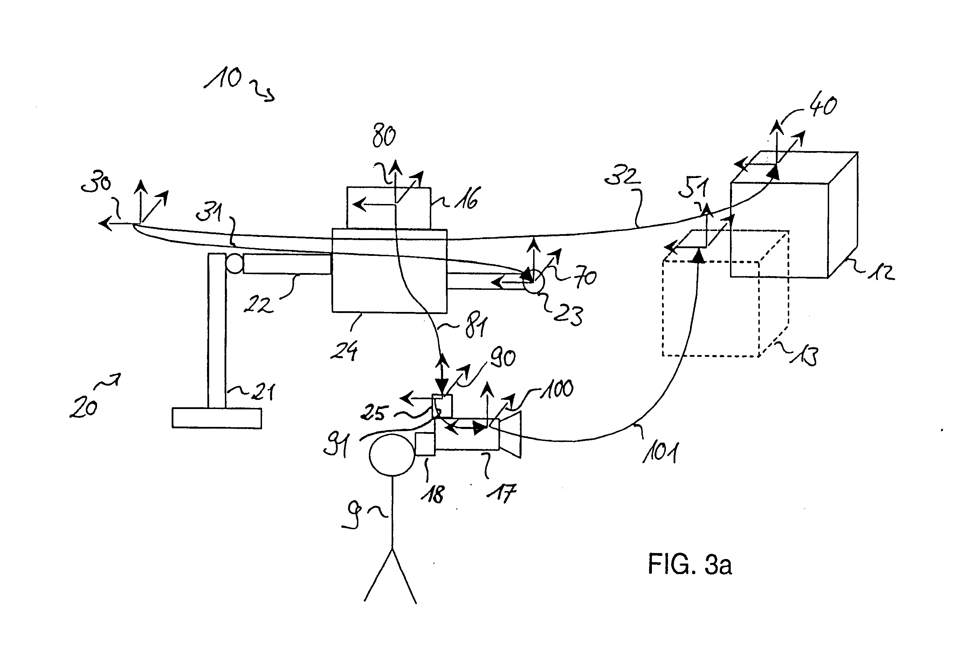

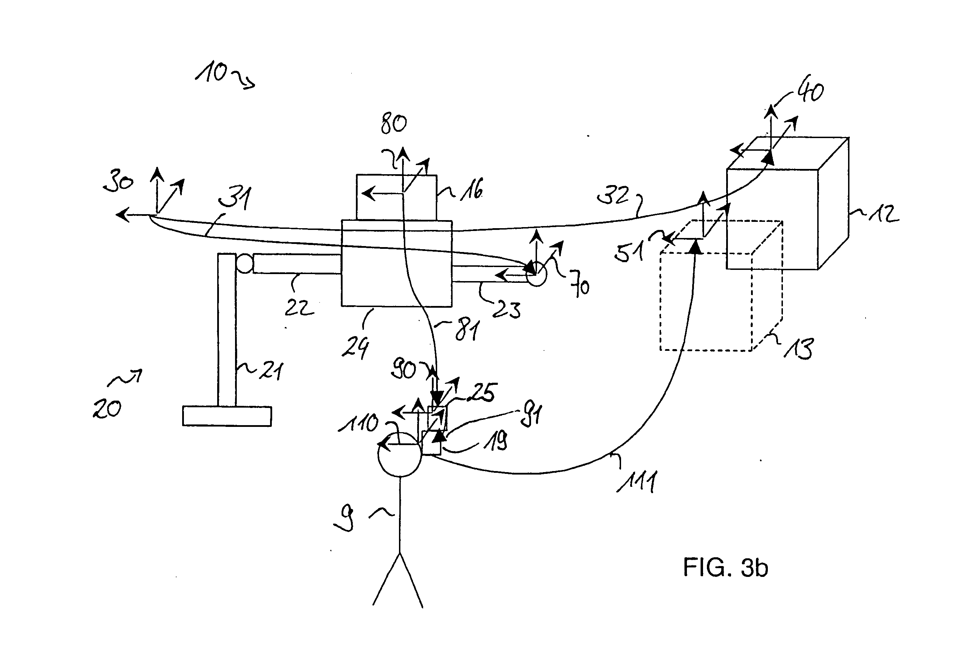

Wenn die Ausgangsparameter zur Bestimmung der Kamerapose ermittelt sind, kann durch an sich bekannte Berechnungsverfahren dann die Pose ermittelt werden. Die Berechnungen finden auf dem Rechner 14 statt, der mit den entsprechenden Sensoren inklusive der Kamera 11 verbunden ist und in der Lage ist, virtuelle Bilder aus 3D-Daten unter Berücksichtigung der Kameraparameter, Pose und Darstellungsfläche zu erzeugen, mit einem Kameraabbild, welches vorteilhafterweise aufgrund der Kameradaten korrigiert wurde, zu mischen und auf einem Anzeigegerät 15 und/oder einem kopfgetragenen Bildschirmsystem 18, 19 (Fig. 3a bzw. 3b) darzustellen. Die Ermittlung der Kameraparameter an sich ist aus dem Stand der Technik bekannt. Ebenso ist die Korrektur eines Kamerabildes aufgrund der Kameraparameter an sich bekannt. Die Übertragung der Kameradaten kann vorteilhafterweise mittels digitaler Übertragungsstandards, wie zum Beispiel dem IEEE 1394-Standard erfolgen.

Auf diese Art können die Transformation 61 zwischen Kamerakoordinatensystem 60 und Koordinatensystem 51 des Datenmodells 13 (in der Ausgangsposition 13-1), sowie die Verschiebungs-Transformation 53 zwischen Koordinatensystem 51 in der Ausgangsposition 13-1 und Koordinatensystem 52 des Datenmodells 13 in der verschobenen Position 13-2 ermittelt werden.

Im Rechner 14 ist ein entsprechendes Computerprogramm hinterlegt, welches gemäß dem beschriebenen Verfahren die Bestimmung der Position und Orientierung der Kamera 11 auf Basis der jeweiligen Positionsdaten vornimmt.

Durch den Einsatz einer vorzugsweise starren Adaptereinrichtung 24, die austauschbare Messtaster 23 und die Kamera 11 miteinander verbindet, kann nun sehr einfach eine hochgenaue Überlagerung durchgeführt werden. Die Adaptereinrichtung 24 ist erfindungsgemäß, mittels mechanischer Methoden aus dem Stand der Technik, so zu gestalten, dass unterschiedliche Messtaster 23 mit hoher Wiederholgenauigkeit eingesetzt und gesichert werden können. Vorteilhafterweise sind die Taster 23 mit Möglichkeiten ausgestattet, so dass die Adaptereinrichtung 24, welche mit entsprechender Sensorik ausgestattet werden kann, die Taster automatisch erkennt und der Rechner 14 entsprechend korrigierte Tasterinformationen automatisch abrufen kann. Die Adaptereinrichtung 24 kann vorteilhafterweise durch ein Stativ oder ähnliche mechanische Mittel (Seilzug, etc.) gestützt werden, bzw. die Bedienperson kann entlastet werden.

Fig. 3 zeigt in schematischer Darstellung weitere Ausführungsformen eines erfindungsgemäßen Systems 10 zur Ermittlung der Position und Orientierung einer Kamera bzw. einer Darstellungsvorrichtung relativ zu einem realen Objekt mit jeweils visualisierten Transformationen zwischen den einzelnen Komponenten. Das System 10 umfasst wiederum ein Sensorsystem 20 mit wenigstens einem ersten beweglichen Teil in Form des Messarms 22, an welchen wenigstens ein Messtaster 23 ankoppelbar ist. Außerdem ist ein zweiter beweglicher Teil 25 des Sensorsystems 20 vorgesehen, der vorliegend nicht mechanisch mit dem Messarm 22 verbunden ist, sozusagen ein unabhängig bewegbarer Sensorkopf 25 ist. Im einfachsten Fall kann der Sensorkopf 25 lediglich eine beliebige Markierung sein.

Ein Trackingsystem 16, beispielsweise ein optisches Trackingsystem, welches auf dem Messarm 22 des Sensorsystems angeordnet ist, dient zur Nachverfolgung ("Tracken") des Sensorkopfs 25. Hierzu umfasst das Trackingsystem eine Kamera mit Rechnersystem, welche z.B. einen Marker des Sensorkopfs 25 erfasst und trackt. Dazu wird die Transformation 81 zwischen Trackingsystem-Koordinatensystem 80 und Sensorkopfkoordinatensystem 90 (z.B. definiert durch Marker) ermittelt. Zur Ermittlung der Transformation zwischen Messtaster-Koordinatensystem 70 und Trackingsystem-Koordinatensystem 80 kann wiederum die "Hand-Eye-Kalibrierung" genutzt werden. Weiterhin ist die Transformation 91 zwischen Sensorkopfkoordinatensystem 90 und Kamerakoordinatensystem 100 bekannt. Die Transformation 101 bezeichnet die Transformation zwischen Kamerakoordinatensystem 100 und Koordinatensystem 51 des Datenmodells 13.

In der Ausführungsform nach Fig. 3a ist eine Kamera 17 auf dem Sensorkopf 25 des Sensorsystem angeordnet und ist geeignet und derart positioniert, um ein Abbild, welches wenigstens einen Teil des realen Objekts 12 beinhaltet, zu generieren. Das von der Kamera generierte Abbild wird auf einem Head Mounted Display (HMD) 18 visualisiert, das vom Benutzer 9 auf dem Kopf getragen wird und dem auch die virtuelle Information eingeblendet wird. Das Trackingsystem 16 (auch als sog.

Outside-In-Sensor-System bezeichnet) bzw. der Messarm 22 ist derart angeordnet, dass die Kamera 17 vom Trackingsystem 16 erfasst wird. Kamera 17 und Display 18 bilden ein sog. Video See-Through System, bei welchem sich vor dem Auge des Benutzers ein Videobildschirm (Display 18) befindet, auf dem reale und virtuelle Seheindrücke vermischt werden.

Eine Schnittstelleneinrichtung 26 (vgl. Fig. 1) dient dazu, um erste Positionsdaten (insbesondere zur Berechnung der Transformation 31) des Sensorsystems 20 in Bezug auf das reale Objekt 12 und zweite Positionsdaten (insbesondere zur Berechnung der Transformation 81) des Trackingssystems 16 auszugeben zur Bestimmung der Position und Orientierung der Kamera 17 relativ zum realen Objekt 12 durch die mit der Schnittstelleneinrichtung 26 koppelbare Verarbeitungseinrichtung 14. Diese Daten finden Verwendung bei der Vermischung eines virtuellen Datenmodells 13 mit dem von der Kamera 17 generierten Abbild. Die Schnittstelleneinrichtung 26 kann drahtlos oder drahtgebunden sein, und kann auch mehrere einzelne Schnittstellen, auch an verschiedenen Orten des Sensorsystems, umfassen. Beispielsweise kann auch das Trackingsystem 16 über eine entsprechende Schnittstelle der Schnittstelleneinrichtung 26 direkt mit dem Rechner 14 verbunden sein.

Mit anderen Worten, betrachtet das Outside-In-Sensor-System 16 einen sog. Out-side-In-Sensorkopf 25 und ermittelt dynamisch die Pose zum Sensorkopfkoordinatensystem 90. Ein geeignetes Outside-In-Sensor-System 16 kann zum Beispiel ein optisches Trackingsystem mit einer oder mehreren Kameras sein, für welches optische Marker den Sensorkopf 25 darstellen. Denkbar sind aber auch Verfahren, welche die Pose über Zeit- oder Winkelmessungen ermitteln. Mittels der Transformation 91 des Sensorkopfes 25 zur vorteilhafterweise am kopfgetragenen Bildschirmsystem 18 befestigten Kamera 17 kann dem Betrachter 9 ein virtuelles Objekt 13, welches sich in einer möglichst korrekten Pose relativ zum realen Objekt 12 befindet, überlagert werden. Möglich ist, dass es sich bei der Kamera 17 um ein Stereo-Kamerasystem handelt und das HMD ein stereoskopisches Bild darstellt. Es ist ein weiterer vorteilhafter Aufbau, dass das HMD durch einen tragbaren Monitor, welcher mit einer Kamera und einem Outside-In-Sensorkopf ausgestattet ist, ersetzt wird.

In der Ausführungsform nach Fig. 3b ist statt der Kamera 17 und dem Display 18 eine Darstellungsvorrichtung 19 in Form eines halbdurchlässigen Head Mounted Displays (optische See-Through-Darstellungsvorrichtung) direkt auf dem Sensorkopf 25 des Sensorsystems angeordnet. Im Falle von optischem See-Through geschieht die Vermischung durch einen sogenannten Optischen Mixer - einer semi-transparenten Darstellungsvorrichtung vor dem Auge des Benutzers, bei der die reale Welt über die Transparenz der Vorrichtung zu sehen ist und die Überlagerung von virtuellen Informationen über Projektion auf die Darstellungsvorrichtung geschieht. Die Kamera 17 kann daher entfallen.

Die Positionsbestimmung der Darstellungsvorrichtung 19 geschieht analog zum System nach Fig. 3a (wie in Bezug auf die dortige Kamera 17 erläutert). Hierzu ist die Transformation 91 zwischen Sensorkopfkoordinatensystem 90 und Displaykoordinatensystem 110 bekannt. Die Transformation 111 bezeichnet die Transformation zwischen Displaykoordinatensystem 110 und Koordinatensystem 51 des Datenmodells 13. Nötig ist in diesem Falle im allgemeinen noch eine sogenannte See-Through-Kalibrierung, wie etwa in Druckschrift US2002/0105484 A1 beschrieben.

Das bezüglich Fig. 1 und 2 mit Bezug auf die Pose-Bestimmung der Kamera 11 Erläuterte gilt in analoger Weise auch für die Pose-Bestimmung des Trackingsystems 16 in den Anordnungen nach Fig. 3, bei denen statt der Kamera 11 das Trackingsystem 16 auf dem Messarm 22 angeordnet ist.

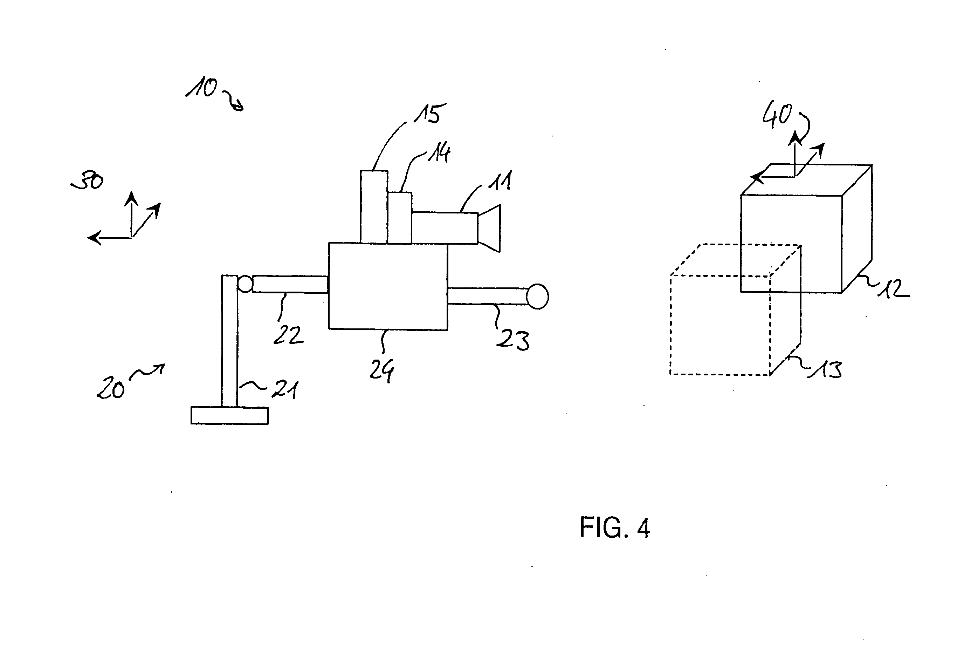

Fig. 4 zeigt einen weiteren vorteilhaften Aufbau, bei dem eine Anzeigeeinrichtung 15 zur Darstellung des Abbilds der Kamera 11 an der Adaptereinrichtung 24 angebracht ist. Außerdem ist auch der Rechner 14 an der Adaptereinrichtung 24 angebracht. Vorzugsweise sind die Kamera 11, der Rechner 14 und die Anzeigeeinrichtung 15 als integrierte Einrichtung ausgeführt, die an der Adaptereinrichtung 24 angebracht ist. In diesem Fall handelt es sich um eine integrierte Lösung (z.B. Kompaktrechner mit Bildschirm und integrierter Kamera, wie grundsätzlich aus dem Stand der Technik bekannt).

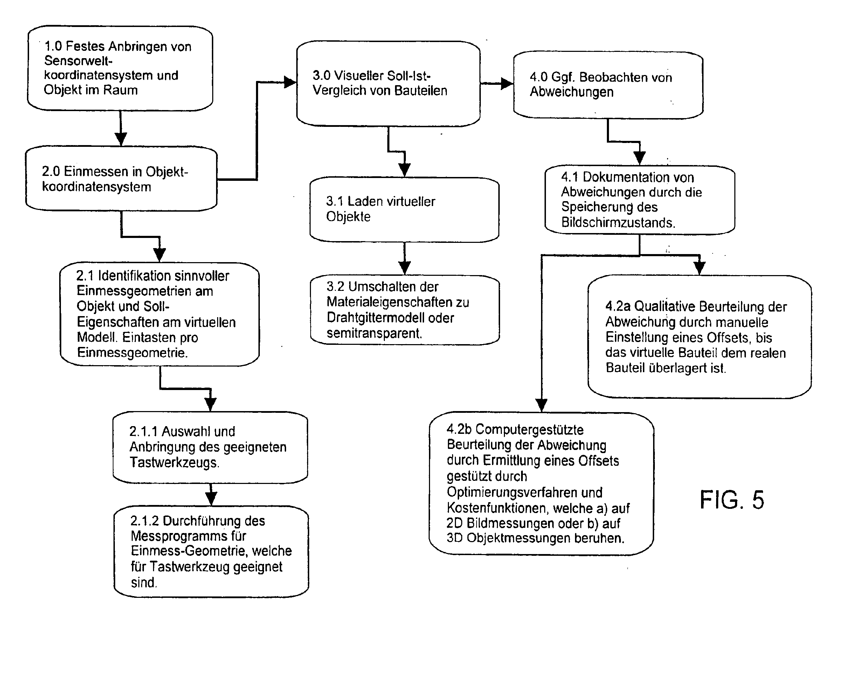

Fig. 5 zeigt ein Flussdiagramm über einen Ablauf eines Verfahrens in einem Augmented Reality System, in welchem das erfindungsgemäße Konzept implementiert ist. Insbesondere zeigt Fig. 5 einen vorteilhaften Ablauf einer Bauteilüberlagerung mittels des Systemaufbaus aus Fig. 1 bis 3.

In einem ersten Schritt wird sichergestellt, dass das Objekt 12 und das Sensorweltkoordinatensystem 30 in einem festen Verhältnis zueinander stehen (Schritt 1.0). Danach wird mittels des Messtasters 23 der Einmessvorgang durchgeführt (Schritt 2.0) und das Ergebnis im Rechner 14 gespeichert. Der Einmessvorgang besteht vorteilhafterweise aus der Identifikation sinnvoller Einmessgeometrien am Objekt 12 (zum Beispiel Bohrungen oder Flächen). Für unterschiedliche Einmessgeometrien können unterschiedliche Tasterformen (zum Beispiel Spitze oder Kugel) vorteilhaft sein. Um Tasterwechsel zu vermeiden, werden sinnvollerweise die Einmessgeometrien geordnet nach Tasterformen eingetastet. Um einen Einmessvorgang durchführen zu können, muss dem möglichen Algorithmus sowohl die Ist-Eigenschaft relativ zum Sensorweltkoordinatensystem 30 bekannt sein, als auch die entsprechende Soll-Eigenschaft im Objektkorrdinatensystem 40 bekannt sein. Vorteilhafterweise kann der Benutzer, um dem System mitzuteilen, um welche Korrespondenz es sich handelt, einen Teil (zum Beispiel einen Punkt, eine Kante oder eine Fläche) eines CAD-Modells zum Beispiel durch einen Mausklick auswählen. Insbesondere bestimmt nun ein Algorithmus aus der CAD-Topologie der Umgebung des ausgewählten CAD-Teils und dem gewählten Einmessalgorithmus nach einem Regelsatz die Ordnung der Messprogramme, wobei nach dem Regelsatz sinnvolle Messprogramme oben in einer Auswahl angeordnet werden. Eine weitere Möglichkeit besteht darin, dass der Nutzer keinen Einmessalgorithmus zu Beginn auswählen muss, sondern nur CAD-Teile auswählt, und ein Regelsatz dann global sowohl den Einmess-Algorithmus, als auch die einzelnen Messprogramme, als auch die Wahl der Taster und die Reihenfolge von Messprogrammen und einzutastenden CAD-Teilen festlegt. Ist kein CAD-Modell vorhanden, können auch direkt Soll-Eigenschaften mit einschränkenden Freiheitsgraden angegeben werden (Schritt 2.1).

Ist dem Programm bekannt, welches CAD-Teil oder welche eingegebene Soll-Eigenschaft mit welchem Messprogramm eingetastet wird oder hat das Programm dies dem Benutzer, zum Beispiel visuell, mitgeteilt, kann der Nutzer, falls nicht schon eingesetzt, den gewünschten Messtaster einsetzen und das Messprogramm durchführen (zum Beispiel das Verfahren einer runden Tastkugel auf einer Ebene). Dieser Vorgang wird für jedes gewählte CAD-Teil durchgeführt. Schließlich kann der Einmess-Algorithmus die Transformation 32 bestimmen (Schritte 2.1.1 und 2.1.2).

Nun kann die Untersuchung fortgesetzt werden. Beispielsweise können nun ergänzende Designelemente an ein Prototypenfahrzeug als reales Objekt 12 virtuell angeheftet werden oder es kann ein Soll-Ist-Vergleich von Bauteilen durchgeführt werden (Schritt 3.0). Hierzu kann eines oder mehrere virtuelle Objekte, zum Beispiel beschrieben durch die Virtual Reality Modeling Language (VRML), eingeladen werden (Schritt 3.1). Es kann, gegebenenfalls, aber auch direkt die für das Einmessen verwendete virtuelle Geometrie angezeigt werden. Vorteilhafterweise können die Materialeigenschaften der digitalen Modelle verändert werden (Schritt 3.2).

Ist die visuelle Kontrolle nicht zufriedenstellend, können gegebenenfalls gezielt Abweichungen dokumentiert werden (Schritt 4.0). Eine Vermessung eines Abstandes zwischen einem interessierenden Teil des realen Objekts und einem korrespondierenden Teil des virtuellen Datenmodells kann beispielsweise dadurch erfolgen, dass vom Benutzer ein Teil des virtuellen Modells, etwa ein interessierender Punkt, im Abbild unter Bestimmung eines ersten Punkts ausgewählt wird und anschließend vom Benutzer unter Bestimmung eines zweiten Punkts ein korrespondierendes Teil des realen Objekts mittels des Messtasters ausgewählt wird, wobei der zu bestimmende Abstand der Abstand zwischen dem ersten und zweiten Punkt ist. Diese Auswahlreihenfolge ist auch umkehrbar, d.h. es kann zuerst ein interessierender Punkt am realen Objekt in der Realität mittels des Messtasters ausgewählt werden und nachfolgend ein korrespondierender Punkt im virtuellen Modell.

Es besteht die Möglichkeit zur Kommunikation mit Beteiligten, den aktuellen Bildschirmzustand abzuspeichern (Schritt 4.1, zum Beispiel als JPEG). Soll eine quantitative Aussage getroffen werden, besteht für den Benutzer die Möglichkeit einerseits, zum Beispiel durch ein Bedienelement, zum Beispiel ein Mausrad, einzelne Freiheitsgrade der Korrekturtransformation 53 (Fig. 2) zu der überlagerten, virtuellen Geometrie 13 zu verändern, bis die Geometrie 13 das reale Teil 12 möglichst korrekt überlagert (Schritt 4.2a). Die Korrekturtransformation 53 ergibt dann eine Aussage über die Abweichung. Alternativ besteht die Möglichkeit einer computergestützen Ermittlung der Abweichung (Schritt 4.2b). Dabei variiert ein Optimierungsverfahren die Korrekturtransformation 53 und misst die verbleibende Abweichung, welche in die Kostenfunktion des Optimierungsverfahrens eingeht. Die Messungen der Kostenfunktionen können 2-dimensional oder 3-dimensional erfolgen. 3-dimensionale Daten können einerseits durch zusätzliche 3D-Sensoren, wie zum Beispiel einem Laserscanner, ermittelt werden oder mittels aus dem Stand der Technik bekannter 3D-Rekonstruktionsalgorithmen gewonnen werden, welche unterschiedliche Kameraansichten und die zugehörigen Trackingdaten verwenden.

Vorteile und Anwendungen des Systems und Verfahrens gemäß der Erfindung sind nochmals zusammengefasst:

Derzeitige Systeme besitzen den Nachteil, dass das Herstellen des Bezugs zwischen Sensorkoordinatensystem und Objektkoordinatensystem meist unzureichend gelöst ist. Z.B betrachtet ein Trackingsystem etwa eine Markierung in der Realität (zum Beispiel an einem Fahrzeug). Vorher muss die Markierung jedoch mittels eines Messsystems bezüglich des Weltkoordinatensystems (Fahrzeugkoordinatensystems) separat eingemessen werden. Der klare Vorteil des beschriebenen Systems und Verfahrens ist daher die direkte Kombination von Einmess- und Betrachtungssystem. Folgende Vorteile ergeben sich:

- Zeiteinsparung bei Überlagerungsaufgaben, da kein Wechsel zwischen Einmess- und Betrachtungswerkzeug nötig ist. Dies bezieht sich auf den physischen Wechsel und das Umschalten in der Bediensoftware.

- Einsparung von Hardwarekosten, zum Beispiel bei optischen Systemen, da teure Markierungen nur für einen kombinierten Kopf, nicht für unterschiedliche Köpfe beschafft und gepflegt werden müssen.

- Verringerung der Softwarekomplexität dadurch, dass die Software, zum Beispiel, nicht unterschiedliche optische Marker verwalten muss.

**Patentansprüche**

1. Verfahren zur Vermischung eines virtuellen Datenmodells (13) mit einem von einer Kamera (11) generierten Abbild, welches wenigstens einen Teil eines realen Objekts (12) beinhaltet, mit folgenden Schritten:

- Anordnen der Kamera (11) auf einem beweglichen Teil (22) eines Sensorsystems (20), das zumindest zeitweise mit wenigstens einem Messtaster (23) gekoppelt ist, welcher geeignet ist, mit wenigstens einem Teil des realen Objekts (12) in einem Einmessvorgang in Berührung zu kommen,

- Positionieren des beweglichen Teils (22) des Sensorsystems mit aufgebrachter Kamera (11) in der Weise, dass ein Abbild durch die Kamera generiert wird, und Generieren von Positionsdaten (31) des Sensorsystems (20) in Bezug auf das reale Objekt (12),

- Bestimmung der Position und Orientierung der Kamera (11) relativ zum realen Objekt (12) auf Basis der Positionsdaten (31, 32) des Sensorsystems (20) und Vermischung eines virtuellen Datenmodells (13), welches eine Konstruktionszeichnung repräsentiert, mit dem durch die Kamera (11) generierten Abbild auf Basis der Position und Orientierung der Kamera (11),

- wobei das virtuelle Datenmodell weitgehend genau mit dem realen Objekt überlagert wird und relative Abweichungen zwischen dem virtuellen Datenmodell und dem realen Objekt festgestellt werden.

2. Verfahren nach Anspruch 1, mit den Schritten:

- Anordnen eines festen Teils (21) des Sensorsystems (20) in einem festen Bezug zum realen Objekt (12) und Einrichten eines Sensorkoordinatensystems (30) als Bezugssystem des Sensorsystems,

- Bestimmung einer Position (32) des Sensorkoordinatensystems (30) in Bezug auf das reale Objekt (12).

3. Verfahren nach Anspruch 2, wobei die Bestimmung der Position (32) des Sensorkoordinatensystems (30) in Bezug auf das reale Objekt (12) dadurch erfolgt, dass der Messtaster (23) in wenigstens einem Einmessvorgang (2.0) mit wenigstens einem Teil des realen Objekts (12) in Berührung gebracht wird.

4. Verfahren nach Anspruch 3, wobei der wenigstens eine Einmessvorgang (2.0) gemäß einem von mehreren hinterlegten Einmessalgorithmen vorgenommen wird.

5. Verfahren nach einem der Ansprüche 1 bis 4, bei dem zur Bestimmung der Position und Orientierung der Kamera (11) eine Bestimmung der Position (62) der Kamera (11) in Bezug auf den Messtaster (23) durch eine Hand-Eye-Kalibrierung erfolgt.

6. Verfahren zur Vermischung eines virtuellen Datenmodells (13) mit einem von einer Kamera (17) oder einer Darstellungsvorrichtung (19) generierten Abbild, welches wenigstens einen Teil eines realen Objekts (12) beinhaltet, mit folgenden Schritten:

- Anordnen eines Trackingsystems (16) auf einem ersten beweglichen Teil (22) eines Sensorsystems (20), das zumindest zeitweise mit wenigstens einem Messtaster (23) gekoppelt ist, welcher geeignet ist, mit wenigstens einem Teil des realen Objekts (12) in einem Einmessvorgang in Berührung zu kommen,

- Anordnen der Kamera (17) bzw. der Darstellungsvorrichtung (19) in festem Bezug zu einem zweiten beweglichen Teil (25) des Sensorsystems (20),

- Positionieren des ersten beweglichen Teils (22) des Sensorsystems derart, dass der zweite bewegliche Teil (25) des Sensorsystems vom Trackingsystem (16) erfassbar ist,

- Positionieren des zweiten beweglichen Teils (25) des Sensorsystems mit der Kamera (17) bzw. Darstellungsvorrichtung (19) in der Weise, dass ein Abbild durch die Kamera bzw. die Darstellungsvorrichtung generiert wird, und Generieren von ersten Positionsdaten (31) des Sensorsystems (20) in Bezug auf das reale Objekt (12) und von zweiten Positionsdaten (81) des Trackingsystems (16) in Bezug auf den zweiten beweglichen Teil (25) des Sensorsystems,

- Bestimmung der Position und Orientierung der Kamera (17) bzw. der Darstellungsvorrichtung (19) relativ zum realen Objekt (12) auf Basis der ersten und zweiten Positionsdaten (31, 32, 81) und Vermischung eines virtuellen Datenmodells, welches eine Konstruktionszeichnung repräsentiert, mit dem generierten Abbild auf Basis der Position und Orientierung der Kamera (17) bzw. der Darstellungsvorrichtung (19),

- wobei das virtuellen Datenmodell weitgehend genau mit dem realen Objekt überlagert wird und relative Abweichungen zwischen dem virtuellen Datenmodell und dem realen Objekt festgestellt werden.

7. Verfahren nach einem der Ansprüche 1 bis 6, bei dem eine Güte der Übereinstimmung des virtuellen Datenmodells (13) und des realen Objekts (12) bestimmt wird, inbesondere eine Vermessung wenigstens eines Abstandes zwischen wenigstens einem Teil des realen Objekts (12) und wenigstens einem Teil des virtuellen Datenmodells (13) erfolgt.

**8.** Verfahren nach Anspruch 7, bei dem eine Vermessung wenigstens eines Abstandes zwischen wenigstens einem Teil des realen Objekts (12) und wenigstens einem Teil des virtuellen Datenmodells (13) dadurch erfolgt, dass vom Benutzer ein Teil des virtuellen Modells im Abbild oder des realen Objekts mittels des Messtasters (23) unter Bestimmung eines ersten Punkts ausgewählt wird und anschließend vom Benutzer unter Bestimmung eines zweiten Punkts ein korrespondierendes Teil des realen Objekts (12) mittels des Messtasters (23) bzw. des virtuellen Modells (13) im Abbild ausgewählt wird, wobei der zu bestimmende Abstand der Abstand zwischen dem ersten und zweiten Punkt ist.

**9.** Verfahren nach Anspruch 7 oder 8, bei dem die Bestimmung der Güte der Übereinstimmung des virtuellen Datenmodells (13) und des realen Objekts (12) unter Verwendung eines kantenbasierten oder flächenbasierten Trackingverfahrens durchgeführt wird.

**10.** Verfahren nach Anspruch 7, 8 oder 9, bei dem die Bestimmung der Güte der Übereinstimmung des virtuellen Datenmodells (13) und des realen Objekts (12) den Schritt beinhaltet, dass durch den Benutzer oder durch einen implementieren Algorithmus ein Abgleich bei der Vermischung des realen Objekts (12) und des virtuellen Datenmodells (13) vorgenommen wird, bis wenigstens ein Teil des Datenmodells einen korrespondierenden Teil des realen Objekts weitgehend korrekt überlagert, wobei das Maß für den vorgenommenen Abgleich als Basis für eine Aussage über die Güte der Vermischung verwendet wird.

**11.** Verfahren nach einem der Ansprüche 1 bis 10, bei dem eine Ungenauigkeitsinformation bei der Positionierung des Datenmodells (13) relativ zum realen Objekt (12) generiert wird.

**12.** System (10) zur Vermischung eines virtuellen Datenmodells mit einem durch eine Kamera (11) generierten Abbild, umfassend:

     - ein Sensorsystem (20) mit wenigstens einem beweglichen Teil (22), an welchen zumindest zeitweise wenigstens ein Messtaster (23) gekoppelt ist, welcher geeignet ist, mit wenigstens einem Teil des realen Objekts (12) in einem Einmessvorgang in Berührung zu kommen,
     - eine Kamera (11), die auf dem beweglichen Teil (22) des Sensorsystem angeordnet ist und die geeignet ist zur Generierung eines Abbilds, welches wenigstens einen Teil des realen Objekts (12) beinhaltet,
     - mit einer Schnittstelleneinrichtung (26), um Positionsdaten (31) des Sensorsystems (20) in Bezug auf das reale Objekt (12) auszugeben zur Bestimmung der Position und Orientierung der Kamera (11) relativ zum realen Objekt (12),
     - eine mit der Schnittstelleneinrichtung (26) gekoppelte Verarbeitungseinrichtung (14) eingerichtet zur Bestimmung der Position und Orientierung der Kamera (11) relativ zum realen Objekt (12) auf Basis der Positionsdaten (31, 32) des Sensorsystems (20), und zur Vermischung eines virtuellen Datenmodells (13), welches eine Konstruktionszeichnung repräsentiert, mit dem durch die Kamera (11) generierten Abbild auf Basis der Position und Orientierung der Kamera (11), wobei das virtuelle Datenmodell weitgehend genau mit dem realen Objekt überlagert wird und relative Abweichungen zwischen dem virtuellen Datenmodell und dem realen Objekt festgestellt werden.

**13.** System nach Anspruch 12, bei dem die Kamera (11), die Verarbeitungseinrichtung (14) und eine Anzeigeeinrichtung (15) zur Darstellung des Abbilds der Kamera als integrierte Einrichtung ausgeführt sind, die an einer Adaptereinrichtung (24) angebracht ist, die eine mechanische Verbindung zwischen dem Messtaster (23) und integrierter Einrichtung (11, 14, 15) herstellt.

**14.** System (10) zur Vermischung eines virtuellen Datenmodells mit einem durch eine Kamera (17) oder eine Darstellungsvorrichtung (19) generierten Abbild, umfassend:

     - ein Sensorsystem (20) mit wenigstens einem ersten beweglichen Teil (22), an welchen zumindest zeitweise wenigstens ein Messtaster (23) gekoppelt ist, welcher geeignet ist, mit wenigstens einem Teil des realen Objekts (12) in einem Einmessvorgang in Berührung zu kommen, und mit einem zweiten beweglichen Teil (25),
     - ein Trackingsystem (16), welches auf dem ersten beweglichen Teil (22) des Sensorsystems angeordnet ist,
     - eine Kamera (17) oder eine Darstellungsvorrichtung (19), die auf dem zweiten beweglichen Teil (25) des Sensorsystem angeordnet ist und die geeignet ist zur Generierung eines Abbilds, welches wenigstens einen Teil des realen Objekts (12) beinhaltet,
     - wobei das Trackingsystem (16) derart anordenbar ist, dass der zweite bewegliche Teil (25) des Sensorsystems vom Trackingsystem (16) erfassbar ist,
     - mit einer Schnittstelleneinrichtung (26), um erste Positionsdaten (31) des Sensorsystems (20) in Bezug auf das reale Objekt (12) und zweite Positionsdaten (81) des Trackingssystems (16) in Bezug auf den zweiten beweglichen Teil (25) des Sensorsystems auszugeben zur Bestimmung der Position und Orientierung der Kamera (17) bzw. der Darstellungsvorrichtung (19) relativ zum realen Objekt (12),

- eine mit der Schnittstelleneinrichtung (26) gekoppelte Verarbeitungseinrichtung (14) eingerichtet zur Bestimmung der Position und Orientierung der Kamera (17) bzw. der Darstellungsvorrichtung (19) relativ zum realen Objekt (12), und zur Vermischung eines virtuellen Datenmodells, welches eine Konstruktionszeichnung repräsentiert, mit dem generierten Abbild auf Basis der Position und Orientierung der Kamera (17) bzw. der Darstellungsvorrichtung (19), wobei das virtuelle Datenmodell weitgehend genau mit dem realen Objekt überlagert wird und relative Abweichungen zwischen dem virtuellen Datenmodell und dem realen Objekt festgestellt werden.

**15.** Computerprogrammprodukt, welches Softwarecodeabschnitte aufweist, welche in einem Verfahren nach einem der Ansprüche 1 bis 11 zur Vermischung des virtuellen Datenmodells (13) mit dem von der Kamera (11) generierten Abbild geeignet sind, wenn sie in einem System (10) zur Vermischung eines virtuellen Datenmodells (13) mit einem von einer Kamera (11) generierten Abbild gespeichert sind.


**Claims**

**1.** A method for merging a virtual data model (13) with an image generated by a camera (11), said image comprising at least one part of a real object (12), having the following steps:

- disposing the camera (11) on a movable part (22) of a sensor system (20) which is coupled at least temporarily with at least one probe (23) which is suitable to come in contact in a calibrating process with at least one part of the real object (12),
- positioning the movable part (22) of the sensor system, with the camera (11) applied, in such a manner that an image is generated by the camera, and generating position data (31) of the sensor system (20) with respect to the real object (12),
- determining the position and orientation of the camera (11) relative to the real object (12) on the basis of the position data (31, 32) of the sensor system (20) and merging of a virtual data model (13), which represents a design drawing, with the image generated by the camera (11) on the basis of the position and orientation of the camera (11),
- wherein the virtual data model is superimposed with the real object largely correctly and relative deviations between the virtual data model and the real object are determined.

**2.** The method according to claim 1, having the steps of:

- disposing a fixed part (21) of the sensor system (20) in a fixed relation to the real object (12) and setting up a sensor coordinate system (30) as a frame of reference of the sensor system,
- determining a position (32) of the sensor coordinate system (30) with respect to the real object (12).

**3.** The method according to claim 2, wherein the determination of the position (32) of the sensor coordinate system (30) with respect to the real object (12) is effected by the probe (23) being brought in contact with at least one part of the real object (12) in at least one calibrating process (2.0).

**4.** The method according to claim 3, wherein the at least one calibrating process (2.0) is performed according to one of a plurality of retained calibrating algorithms.

**5.** The method according to any of claims 1 to 4, wherein for determination of the position and orientation of the camera (11) a determination of the position (62) of the camera (11) with respect to the probe (23) is effected by a hand-eye calibration.

**6.** A method for merging a virtual data model (13) with an image generated by a camera (17) or a display apparatus (19), said image comprising at least one part of a real object (12), having the following steps:

- disposing a tracking system (16) on a first movable part (22) of a sensor system (20) which is coupled at least temporarily with at least one probe (23) which is suitable to come in contact in a calibrating process with at least one part of the real object (12),
- disposing the camera (17) or the display apparatus (19), respectively, in fixed relation to a second movable part (25) of the sensor system (20),
- positioning the first movable part (22) of the sensor system such that the second movable part (25) of the sensor system is detectable by the tracking system (16),
- positioning the second movable part (25) of the sensor system with the camera (17) or display apparatus (19), respectively, in such a manner that an image is generated by the camera or the display apparatus, respectively, and generating first position data (31) of the sensor system (20) with respect to the real object (12) and second position data (81) of the tracking system (16) with respect to the second movable part (25) of the sensor system,

- determining the position and orientation of the camera (17) or the display apparatus (19), respectively, relative to the real object (12) on the basis of the first and second position data (31, 32, 81) and merging of a virtual data model, which represents a design drawing, with the generated image on the basis of the position and orientation of the camera (17) or the display apparatus (19), respectively,

- wherein the virtual data model is superimposed with the real object largely correctly and relative deviations between the virtual data model and the real object are determined.

7. The method according to any of claims 1 to 6, wherein
a quality of the match of the virtual data model (13) and the real object (12) is determined, in particular a measurement of at least one distance between at least one part of the real object (12) and at least one part of the virtual data model (13) is effected.

8. The method according to claim 7, wherein
a measurement of at least one distance between at least one part of the real object (12) and at least one part of the virtual data model (13) is effected by the user selecting a part of the virtual model in the image or of the real object by means of the probe (23) so as to determine a first point, and subsequently the user selecting a corresponding part of the real object (12) by means of the probe (23) or of the virtual model (13) in the image, respectively, so as to determine a second point, whereby the distance to be determined is the distance between the first and second points.

9. The method according to claim 7 or 8, wherein
the determination of the quality of the match of the virtual data model (13) and the real object (12) is carried out using an edge-based or area-based tracking method.

10. The method according to claim 7, 8 or 9, wherein
the determination of the quality of the match of the virtual data model (13) and the real object (12) comprises the step that the user or an implemented algorithm performs a comparison upon the merge of the real object (12) and the virtual data model (13) until at least one part of the data model superimposes a corresponding part of the real object largely correctly, whereby the measure of the performed comparison is employed as a basis for a statement about the quality of the merge.

11. The method according to any of claims 1 to 10, wherein
inaccuracy information is generated upon the positioning of the data model (13) relative to the real object (12).

12. A system (10) for merging a virtual data model with an image generated by a camera (11), comprising;

- a sensor system (20) having at least one movable part (22) which is coupled at least temporarily with at least one probe (23) which is suitable to come in contact in a calibrating process with at least one part of the real object (12),
- a camera (11) which is disposed on the movable part (22) of the sensor system and which is suitable to generate an image which comprises at least one part of the real object (12),
- with an interface device (26) in order to output position data (31) of the sensor system (20) with respect to the real object (12), for determination of the position and orientation of the camera (11) relative to the real object (12)
- a processing device (14) coupled to the interface device (26) configured to determine the position and orientation of the camera (11) relative to the real object (12) on the basis of the position data (31, 32) of the sensor system (20), and to merge of a virtual data model (13), which represents a design drawing, with the image generated by the camera (11) on the basis of the position and orientation of the camera (11), wherein the virtual data model is superimposed with the real object largely correctly and relative deviations between the virtual data model and the real object are determined.

13. The system according to claim 12, wherein
the camera (11), the processing device (14) and a display device (15) for displaying the image of the camera are implemented as an integrated device which is attached to an adapter device (24) which produces a mechanical connection between the probe (23) and integrated device (11, 14, 15).

14. A system (10) for merging a virtual data model with an image generated by a camera (17) or a display apparatus (19), comprising:

- a sensor system (20) having at least one first movable part (22) which is coupled at least temporarily with at least one probe (23) which is suitable to come in contact in a calibrating process with at least one part of the real object (12), and having a second movable part (25),
- a tracking system (16) which is disposed on the first movable part (22) of the sensor system,
- a camera (17) or a display apparatus (19) which is disposed on the second movable part (25) of the sensor system and which is suitable to generate an image which comprises at least one part of the real object (12),

- wherein the tracking system (16) is adapted to be disposed such that the second movable part (25) of the sensor system is detectable by the tracking system (16),

- with an interface device (26) in order to output first position data (31) of the sensor system (20) with respect to the real object (12) and second position data (81) of the tracking system (16) with respect to the second movable part (25) of the sensor system, for determination of the position and orientation of the camera (17) or the display apparatus (19), respectively, relative to the real object (12),

- a processing device (14) coupled to the interface device (26) and configured to determine the position and orientation of the camera (17) or the display apparatus (19), respectively, relative to the real object (12), and to merge a virtual data model, which represents a design drawing, with the generated image on the basis of the position and orientation of the camera (17) or the display apparatus (19), respectively, wherein the virtual data model is superimposed with the real object largely correctly and relative deviations between the virtual data model and the real object are determined.

15. A computer program product having software code portions which are suitable in a method according to any of claims 1 to 11 for merging the virtual data model (13) with the image generated by the camera (11), when they are stored in a system (10) for merging a virtual data model (13) with an image generated by a camera (11).

## Revendications

1. Procédé pour mélanger un modèle de données virtuel (13) avec une image générée par une caméra (11) qui renferme au moins une partie d'un objet réel (12), comprenant les étapes suivantes consistant à :

  - placer la caméra (11) sur une partie mobile (22) d'un système de détection (20) qui est couplé au moins temporairement à au moins un palpeur de mesure (23) qui est approprié pour entrer en contact avec au moins une partie de l'objet réel (12) dans un processus de détermination topographique ;
  - positionner la partie mobile (22) du système de détection sur lequel est appliquée la caméra (11) de telle sorte qu'une image est générée par la caméra, et générer des données de position (31) du système de détection (20) par rapport à l'objet réel (12) ;
  - déterminer la position et l'orientation de la caméra (11) par rapport à l'objet réel (12) sur base des données de position (31, 32) du système de détection (20) et mélanger un modèle de données virtuel (13) qui représente un dessin d'exécution avec l'image générée par la caméra (11) sur base de la position et de l'orientation de la caméra (11) ;
  - dans lequel on procède à une superposition précise dans une large mesure du modèle de données virtuel et de l'objet réel et on relève les écarts relatifs entre le modèle de données virtuel et l'objet réel.

2. Procédé selon la revendication 1, comprenant les étapes dans lesquelles :

  - on établit une relation fixe entre une partie fixe (21) du système de détection (20) et l'objet réel (12) et on agence un système de coordonnées de détection (30) à titre de système de référence du système de détection ;
  - on détermine une position (32) du système de coordonnées de détection (30) par rapport à l'objet réel (12).

3. Procédé selon la revendication 2, dans lequel la détermination de la position (32) du système de coordonnées de détection (30) par rapport à l'objet réel (12) a lieu de telle sorte que l'on amène le palpeur de mesure (23), dans au moins un processus de détermination topographique (2.0) en contact avec au moins une partie de l'objet réel (12).

4. Procédé selon la revendication 3, dans lequel on met en oeuvre ledit au moins un processus de détermination topographique (2.0) conformément à un algorithme de détermination topographique parmi plusieurs algorithmes de relevés topographiques enregistrés.

5. Procédé selon l'une quelconque des revendications 1 à 4, dans lequel pour la détermination de la position et de l'orientation de la caméra (11), on met en oeuvre une détermination de la position (62) de la caméra (11) par rapport au palpeur de mesure (23) via un étalonnage oculo-manuel.

6. Procédé pour mélanger un modèle de données virtuel (13) avec une image générée par une caméra (17) ou par un dispositif de représentation (19), qui renferme au moins une partie d'un objet réel (12), comprenant les étapes suivantes consistant à :

  - placer un système de poursuite (16) sur une première partie mobile (22) d'un système de détection (20) qui est couplé au moins en partie à au moins un palpeur de mesure (23) qui est approprié pour entrer en contact avec au moins une partie de l'objet réel (12) dans un processus de détermination topographique ;

- établit une relation fixe entre la caméra (17) respectivement le dispositif de représentation (19) et une deuxième partie mobile (25) du système de détection (20) ;

- positionner la première partie mobile (22) du système de détection de telle sorte que la deuxième partie mobile (25) du système de détection peut être enregistrée par le système de poursuite (16) ;

- positionner la deuxième partie mobile (25) du système de détection avec la caméra (17), respectivement le dispositif de représentation (19) de telle sorte qu'une image est générée par la caméra, respectivement par le dispositif de représentation, et générer des premières données de position (31) du système de détection (20) par rapport à l'objet réel (12) et des deuxièmes données de position (81) du système de poursuite (16) par rapport à la deuxième partie mobile (25) du système de détection ;

- déterminer la position et l'orientation de la caméra (17), respectivement du dispositif de représentation (19) par rapport à l'objet réel (12) sur base des premières et deuxièmes données de position (31, 32, 81) et mélanger un modèle de données virtuel, qui représente un dessin d'exécution, avec l'image générée sur base de la position et de l'orientation de la caméra (17), respectivement du dispositif de représentation (19) ;

- dans lequel on procède à une superposition précise dans une large mesure du modèle de données virtuel et de l'objet réel et on relève les écarts relatifs entre le modèle de données virtuel et l'objet réel.

**7.** Procédé selon l'une quelconque des revendications 1 à 6, dans lequel on détermine une qualité de la correspondance entre le modèle de données virtuel (13) et l'objet réel (12), en particulier on procède à une mesure d'au moins une distance entre au moins une partie de l'objet réel (12) et au moins une partie du modèle de données virtuel (13).

**8.** Procédé selon la revendication 7, dans lequel on procède à une mesure d'au moins une distance entre au moins une partie de l'objet réel (12) et au moins une partie du modèle de données virtuel (13) de telle sorte que l'utilisateur sélectionne une partie du modèle virtuel dans l'image ou de l'objet réel au moyen du palpeur de mesure (23) en déterminant un premier point et ensuite l'utilisateur sélectionne, en déterminant un deuxième point, une partie correspondante de l'objet réel (12) au moyen du palpeur de mesure (23) respectivement du modèle virtuel (13) dans l'image, la distance à déterminer représentant la distance entre le premier et le deuxième point.

**9.** Procédé selon la revendication 7 ou 8 dans lequel on procède à la détermination de la qualité de la correspondance entre le modèle de données virtuel (13) et l'objet réel (12) en utilisant un procédé de poursuite basé sur les arêtes ou basé sur les surfaces.

**10.** Procédé selon la revendication 7, 8 ou 9, dans lequel la détermination de la qualité de la correspondance entre le modèle de données virtuel (13) et l'objet réel (12) comprend l'étape dans laquelle on procède, via l'utilisateur ou via un algorithme implémenté, à un rapprochement, lors du mélange de l'objet réel (12) et du modèle de données virtuel (13), jusqu'à ce que qu'au moins une partie du modèle de données vienne se superposer correctement dans une large mesure à une partie correspondante de l'objet réel, la mesure pour le rapprochement mis en oeuvre étant utilisée comme base pour une détermination quant à la qualité du mélange.

**11.** Procédé selon l'une quelconque des revendications 1 à 10, dans lequel on génère une information de manque de précision lors du positionnement du modèle de données (13) par rapport à l'objet réel (12).

**12.** Système (10) pour le mélange d'un modèle de données virtuel (13) avec une image générée par une caméra (11), comprenant :

- un système de détection (20) comprenant au moins une partie mobile (22) à laquelle est couplé au moins temporairement au moins un palpeur de mesure (23) qui est approprié pour entrer en contact avec au moins une partie de l'objet réel (12) dans un processus de détermination topographique ;

- une caméra (11) qui est montée sur la partie mobile (22) du système de détection et qui est appropriée pour générer une image qui renferme au moins une partie de l'objet réel (12) ;

- un dispositif faisant office d'interface (26) pour fournir des données de position (31) du système de détection (20) par rapport à l'objet réel (12) à des fins de détermination de la position et de l'orientation de la caméra (11) par rapport à l'objet réel (12) ;

- un dispositif de traitement (14) couplé au dispositif faisant office d'interface (26), conçu pour la détermination de la position et de l'orientation de la caméra (11) par rapport à l'objet réel (12) sur base des données de position (31, 32) du système de détection (20) et pour le mélange d'un modèle de données virtuel (13), qui représente un dessin d'exécution, avec l'image générée par la caméra (11) sur base de la position et de l'orientation de la caméra (11), le modèle de données virtuel étant superposé à l'objet réel avec précision dans une large mesure et des écarts relatifs entre le modèle de données virtuel et l'objet réel étant relevés.

13. Système selon la revendication 12, dans lequel la caméra (11), le dispositif de traitement (14) et un dispositif d'affichage (15) pour la représentation de l'image de la caméra sont réalisés sous la forme d'un dispositif intégré qui est appliqué sur un dispositif (24) faisant office d'adaptateur qui établit une liaison mécanique entre le palpeur de mesure (23) et le dispositif intégré (11, 14, 15).

14. Système (10) pour le mélange d'un modèle de données virtuel avec une image générée par une caméra (17) ou par un dispositif de représentation (19), comprenant :

- un système de détection (20) comprenant au moins une première partie mobile (22) à laquelle est couplé au moins temporairement au moins un palpeur de mesure (23) qui est approprié pour entrer en contact avec au moins une partie de l'objet réel (12) dans un processus de détermination topographique, et une deuxième partie mobile (25) ;
- un système de poursuite (16) qui est disposé sur la première partie mobile (22) du système de détection ;
- une caméra (17) ou un dispositif de représentation (19) qui est monté sur la deuxième partie mobile (25) du système de détection et qui est approprié pour générer une image qui renferme au moins une partie de l'objet réel (12) ;
- dans lequel le système de poursuite (16) peut être disposé de telle sorte que la deuxième partie mobile (25) du système de détection peut être enregistrée par le système de poursuite (16) ;
- un dispositif faisant office d'interface (26) pour fournir des premières données de position (31) du système de détection (20) par rapport à l'objet réel (12) et des deuxièmes données de position (81) du système de poursuite (16) par rapport à la deuxième partie mobile (25) du système de détection afin de déterminer la position et l'orientation de la caméra (17), respectivement du dispositif de représentation (19) par rapport à l'objet réel (12) ;
- un dispositif de traitement (14) couplé au dispositif faisant office d'interface (26), conçu pour la détermination de la position et de l'orientation de la caméra (17), respectivement du dispositif de représentation (19) par rapport à l'objet réel (12), et pour le mélange d'un modèle de données virtuel (13), qui représente un dessin d'exécution, avec l'image générée, sur base de la position et de l'orientation de la caméra (17), respectivement du dispositif de représentation (19), le modèle de données virtuel étant superposé à l'objet réel avec précision dans une large mesure et des écarts relatifs entre le modèle de données virtuel et l'objet réel étant relevés.

15. Produit de programme informatique, qui présente des sections de codes de logiciels, qui sont appropriées, dans un procédé selon l'une quelconque des revendications 1 à 11, pour le mélange du modèle de données virtuel (13) avec l'image générée par la caméra (11) lorsqu'elles sont mises en mémoire dans un système (10) pour le mélange d'un modèle de données virtuel (13) avec une image générée par une caméra (11).

FIG. 1

FIG. 2

EP 2 176 833 B1

FIG. 3a

FIG. 3b

EP 2 176 833 B1

FIG. 4

EP 2 176 833 B1

1.0 Festes Anbringen von Sensorwelt-koordinatensystem und Objekt im Raum

2.0 Einmessen in Objekt-koordinatensystem

2.1 Identifikation sinnvoller Einmessgeometrien am Objekt und Soll-Eigenschaften am virtuellen Modell. Eintasten pro Einmessgeometrie.

2.1.1 Auswahl und Anbringung des geeigneten Tastwerkzeugs.

2.1.2 Durchführung des Messprogramms für Einmess-Geometrie, welche für Tastwerkzeug geeignet sind.

3.0 Visueller Soll-Ist-Vergleich von Bauteilen

3.1 Laden virtueller Objekte

3.2 Umschalten der Materialeigenschaften zu Drahtgittermodell oder semitransparent.

4.0 Ggf. Beobachten von Abweichungen

4.1 Dokumentation von Abweichungen durch die Speicherung des Bildschirmzustands.

4.2a Qualitative Beurteilung der Abweichung durch manuelle Einstellung eines Offsets, bis das virtuelle Bauteil dem realen Bauteil überlagert ist.

4.2b Computergestützte Beurteilung der Abweichung durch Ermittlung eines Offsets gestützt durch Optimierungsverfahren und Kostenfunktionen, welche a) auf 2D Bildmessungen oder b) auf 3D Objektmessungen beruhen.

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10128015 A1
- DE 102004046144 A1
- DE 20203367 A
- US 5436638 A
- US 2005285879 A
- US 2005174361 A
- US 2005151963 A
- DE 102005061952
- US 20020105484 A1

**In der Beschreibung aufgeführte Nicht-Patentliteratur**

- **Z. ZHUANG ; Y.C. SHIU.** A noise-tolerant algorithm for robotic hand-eye calibration with or without sensor orientation measurement. *IEEE Transactions on Systems, Man and Cybernetics,* Juli 1993, vol. 23 (4), 1168-1175